# FASCICULE DE BREVET EUROPEEN

(11) **EP 2 342 436 B1**
(45) Date de publication et mention de la délivrance du brevet: **29.08.2018**
(21) Numéro de dépôt: 09760229.6
(22) Date de dépôt: 28.10.2009
(51) Int. Cl.: F01P 11/20, F02P 17/06, F28D 20/00, F01P 5/10

(54) **RESERVOIR DE STOCKAGE D'UN LIQUIDE DE REFROIDISSEMENT POUR MOTEUR A COMBUSTION INTERNE ET DISPOSITIF DE REFROIDISSEMENT ASSOCIE**
KÜHLMITTELRESERVETANK FÜR EINEN VERBRENNUNGSMOTOR UND ZUGEHÖRIGE KÜHLVORRICHTUNG
COOLANT RESERVE TANK FOR AN INTERNAL COMBUSTION ENGINE AND ASSOCIATED COOLING DEVICE

(30) Priorité: 07.11.2008 FR 0857600
(43) Date de publication de la demande: 13.07.2011
(73) Titulaire: Renault S.A.S., 92100 Boulogne-Billancourt (FR)
(72) Inventeur: YU, Robert, 78180 Montigny Le Bretonneux (FR)
(74) Mandataire: Rougemont, Bernard
(86) Numéro de dépôt international: PCT/FR2009/052077
(87) Numéro de publication internationale: WO 2010/052410

(56) Documents cités:
- EP-A- 0 769 619
- FR-A- 2 905 737
- JP-A- 2000 073 764
- JP-A- 2003 129 844
- JP-A- 2006 144 663
- JP-A- 2008 202 510

## Description

### DOMAINE TECHNIQUE GENERAL

L'invention concerne un réservoir de stockage d'un liquide de refroidissement pour un moteur à combustion interne destiné notamment à équiper un véhicule automobile et plus particulièrement à être intégré dans un dispositif de refroidissement par liquide pour moteur à combustion interne pour permettre une montée rapide en température du moteur au démarrage à froid et accélérer ainsi le réchauffement des parois des chambres de combustion.

### ETAT DE LA TECHNIQUE

Il est connu de favoriser au démarrage le réchauffement d'un moteur à combustion interne à refroidissement par liquide de manière à réduire la période de fonctionnement à froid pendant laquelle la consommation en carburant et les émissions de polluants sont très élevées.

En effet, tant que la température d'eau du moteur n'a pas atteint une valeur suffisante de l'ordre de 90°C, le carburant injecté tend à se condenser sur les parois des chambres de combustion et l'huile pas encore assez fluide ne permet pas de réduire significativement les frottements de l'équipage mobile.

L'utilisation de l'eau chaude stockée dans un réservoir isolé thermiquement permet de réduire la consommation et les émissions polluant d'une façon notable.

Il existe deux concepts pour stocker de l'eau de refroidissement de moteur.

Un premier concept dit « avec vidange » vide partiellement le circuit de refroidissement lors de l'arrêt du moteur, le moteur est suite à l'arrêt, chaud et stocke le liquide chaud dans un réservoir équipé d'une membrane ou dans un réservoir de type « soufflet » afin d'éviter une pompe électrique pour la vidange et le remplissage du circuit de refroidissement du moteur.

Un second concept dit « sans vidange » ne vide pas le circuit de refroidissement, lors de l'arrêt moteur chaud. L'eau chaude du circuit principal est en effet aspirée par une pompe et envoyée vers le réservoir, et l'eau froide contenue initialement dans le réservoir est poussée par l'eau chaude et entre dans le circuit principal. Lors du démarrage à froid, l'eau chaude contenue dans le réservoir est expulsée du réservoir par la poussée de l'eau froide venant du circuit principal.

Ce second concept est plus simple à mettre en oeuvre mais est moins efficace que le premier du fait que
a) dans le réservoir la poussée du liquide chaud par le liquide froid crée inévitablement un mélange entre ces deux fluides à température différente ;
b) ce même mélange existe aussi dans le moteur où le liquide froid est poussé par le liquide chaud, ce qui nuit à l'efficacité du Les deux concepts sont connus par exemple de JP 2008 202510, EP 0 769 619 ou FR 2 905 737.

### PRESENTATION DE L'INVENTION

L'invention concerne un circuit de refroidissement du type sans vidange ne présentant pas les inconvénients des circuits de type connu. L'invention concerne un dispositif de refroidissement par liquide pour moteur à combustion interne.

Le dispositif de refroidissement selon l'invention comporte un circuit principal comprenant la chambre d'eau du moteur ; un circuit auxiliaire relié au circuit principal, ledit circuit auxiliaire comprenant un réservoir de stockage d'un liquide de refroidissement pour moteur à combustion interne selon le premier aspect de l'invention.

Le dispositif selon l'invention comprend en outre :
des moyens de pompage pilotés par des moyens de commande pour transférer :
- à l'arrêt du moteur, le liquide de refroidissement du circuit principal vers le réservoir de stockage et du réservoir de stockage vers le circuit principal ;
- avant le démarrage du moteur le liquide de refroidissement du circuit principal vers le réservoir de stockage et du réservoir de stockage vers le circuit principal de manière à accélérer le réchauffement du moteur au cours du démarrage.

### PRESENTATION DES FIGURES

D'autres caractéristiques et avantages de l'invention ressortiront encore de la description qui suit laquelle est purement illustrative et non limitative et doit être lue en regard des dessins annexés sur lesquels
- la figure 1 illustre un premier mode de réalisation d'un dispositif de refroidissement selon l'invention ;
- la figure 2 illustre un second mode de réalisation d'un dispositif de refroidissement selon l'invention ;
- les figures 3 et 4 illustrent des réservoirs de stockage selon l'invention.

### DESCRIPTION DETAILLEE DE L'INVENTION

On comprendra dans la suite de la description qu'un liquide de refroidissement est dit « froid » quand il est à température ambiante et qu'il est « chaud » quand il atteint une température de l'ordre de 90°C. Ainsi, après un démarrage à froid où le moteur est à la température ambiante, le moteur est dit « chaud » quand le liquide l'est.

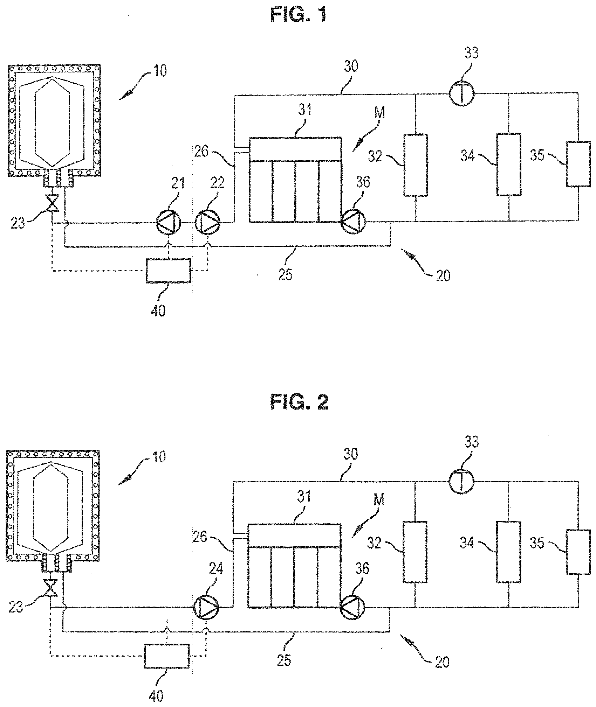

Les figures 1 et 2 illustrent un dispositif de refroidissement qui comporte un circuit principal 30 comprenant la chambre d'eau 31 du moteur et un circuit auxiliaire 20 comprenant des moyens de stockage calorifugés 10, des moyens de pompage 21, 22, 23 pilotés par des moyens de commande 40.

Le circuit principal 30 est un circuit de refroidissement classique qui comprend en outre une pompe mécanique 36, un radiateur 34, un vase d'expansion 35 un thermostat 33 et un radiateur de chauffage 32.

Les moyens de stockage calorifugés 10 sont formés par un boîtier calorifugé 14 présentant une cavité intérieure dans laquelle est disposée une vessie déformable 11 formant un réservoir à volume variable.

Le circuit auxiliaire 20 comprend en plus des moyens de stockage 10 une vanne d'isolation 23, les pompes électriques 21, 22, les conduites 25 et 26.

Les moyens de commande 40 visent à permettre la circulation du liquide du circuit auxiliaire 20 vers le circuit principal 30 et vice versa.

Le liquide est, par exemple, du type d'un mélange d'eau avec un antigel et des additifs anticorrosion.

Dans le moteur, la circulation du liquide de refroidissement est diagonale : le liquide entre en bas du moteur et sort par le haut du côté opposé à l'entrée.

Au démarrage du moteur, un liquide chaud stocké dans la membrane 11 est transféré vers le circuit principal 30 pour le chauffage du moteur par l'intermédiaire de la pompe électrique 22. Le liquide froid, qui - comme on l'aura compris - est dans le circuit principal, est transféré vers les moyens de stockage 11 par l'aspiration de la même pompe 22 car la membrane est souple et elle transmet la dépression crée par la pompe.

Au cours du transfert, le liquide chaud contenu dans le réservoir ne se mélange pas avec le liquide froid venu du circuit principal puisqu'ils se sont séparé physiquement par la membrane.

Une fois la vessie 11 vidée du liquide chaud, la vanne 23 permettant l'isolation des moyens de stockage du circuit principal est fermée pour isoler le liquide froid du reste du dispositif afin de ne pas pénaliser la montée en température du moteur.

Lorsque le véhicule vient à l'arrêt, c'est l'opération inverse qui s'opère.

La pompe 21 aspire le liquide chaud pour le transférer du circuit principal 30 vers l'espace enfermée par la membrane. Au cours de cette opération, la vanne est, bien entendu, ouverte puis fermée une fois le transfert effectué.

Comme on l'aura compris, le circuit principal n'est jamais vidangé ; ce qui évite d'avoir de l'air dans ce dernier.

L'avantage principal de la présence de la membrane à l'intérieur du réservoir est la séparation physique du liquide chaud contenu initialement dans le réservoir du liquide froid venant du circuit principal lors d'un démarrage à froid du moteur.

Ceci permet d'éviter le mélange du liquide chaud avec le liquide froid et vice versa et par là-même la perte de calories du liquide stocké dans le réservoir lors de son transfert vers le moteur.

On note qu'avec une solution - telle que connue -sans membrane, le mélange entre le fluide chaud et le fluide froid est inévitable dans le réservoir de stockage. Ce mélange réduit d'une façon notable la température du liquide chaud et donc l'efficacité d'un tel système de stockage.

En variante, comme représenté sur la figure 2, si le véhicule est déjà équipé d'une pompe électrique 36 assurant la circulation d'eau dans le circuit principal, cette pompe peut être commandée par le système de commande 40 après l'arrêt du moteur et envoyer le liquide chaud vers le réservoir en ouvrant la vanne 23.

Le liquide chaud sort du moteur 31 et entre dans l'espace 17 formé par la membrane 11 en passant successivement par la conduite 26, la vanne 23, et l'ouverture 15, tandis que le liquide froid stocké initialement dans le volume 18 formé entre la membrane 11 et la paroi interne du réservoir 14 est poussé par la membrane. Ainsi, il sort du réservoir et entre dans le circuit principal en passant par l'ouverture 16 et la conduite 25.

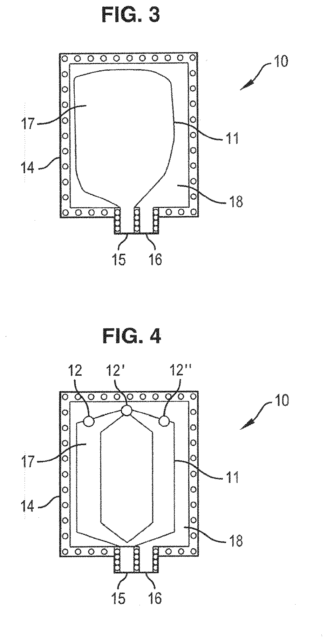

Les figures 3 et 4 illustrent deux types de réservoirs de stockage.

Comme on l'a déjà mentionné, dans un réservoir adiabatique 14, on dispose une vessie déformable 11 connectée au circuit principal par le haut du moteur 31. La chambre formée entre la paroi interne du réservoir 14 et la vessie 11 est reliée au circuit principal par la conduite 25. Il existe deux ouvertures 15 et 16 en bas du réservoir adiabatique, la vessie 11 est fixée sur l'ouverture 15, tandis que la chambre formée entre la paroi interne du réservoir 14 et la vessie 11 est connectée à l'ouverture 16.

Il est à noter que l'on peut indifféremment stocker le liquide chaud dans la chambre ou dans la vessie déformable.

Avec une vessie de paroi imperméable, à la fin du transfert du liquide chaud vers le moteur, il peut exister un résidu du liquide chaud dans le circuit auxiliaire (conduite 26, les pompes 21, 22 ou 24).

Pour que ce résidu de liquide chaud soit transféré complètement vers le circuit principal, la figure 4 illustre une variante des moyens de stockage de la figure 3.

Les moyens de stockage sur cette figure comprennent en plus des micro-ouvertures 12 ménagées sur la vessie 11.

Cette vessie avec des micro-ouvertures peut être aussi une membrane souple de matière quelconque mais à très faible perméabilité. C'est-à-dire que le liquide ne peut traverser la paroi de la vessie que lorsque la différence de pression de part et d'autre de cette paroi est supérieure à environ 0,1 bar.

Cette membrane a la fonction non seulement de séparer le liquide chaud du liquide froid pendant leur transfert du réservoir de stockage vers le moteur ou vice versa, mais aussi de laisser passer une petite quantité du liquide chaud ou du liquide froid à la fin de leur transfert par l'effet de pression du liquide crée par la pompe électrique.

Cette petite quantité du liquide traversant la membrane pousse le résidu du liquide chaud du circuit axillaire vers le circuit principal.

Ce qui permet d'utiliser la totalité du liquide chaud stocké pour le chauffage du circuit principal. La fin de transfert est caractérisée soit par un volume maximum de la vessie et un remplissage complet de l'eau chaude, soit par un dégonflement complet et à son volume minimum.

## Revendications

1. Dispositif de refroidissement par liquide pour moteur à combustion interne comportant
- un circuit principal (30) comprenant la chambre d'eau (31) du moteur (M) ;
- un circuit auxiliaire (20) relié au circuit principal (30), ledit circuit auxiliaire comprenant un réservoir de stockage d'un liquide de refroidissement pour moteur à combustion interne ; ledit réservoir de stockage étant connecté au dispositif de refroidissement et comprenant
∘ un réservoir rigide calorifugé (14) ;
∘ une vessie déformable (11) ;
∘ une cavité formée par l'intérieur de la vessie (17) ; et
∘ une cavité (18) formée entre la vessie (11) et le réservoir rigide (14) ;
∘ une pluralité d'orifices de connexion (15 et 16) destinée à être connectée audit circuit auxiliaire (20)
- des moyens de pompage (21, 22, 23), pilotés par des moyens de commande (40),
- **caractérisé en ce que** les moyens de pompage sont aptes à transférer :
- à l'arrêt du moteur, le liquide de refroidissement échauffé par le moteur du circuit principal (30) vers une première des deux cavités (17, 18) du réservoir de stockage (10) et le liquide de refroidissement à température ambiante de la deuxième des deux cavités (17,18) du réservoir de stockage (10) vers le circuit principal (30) ;
- avant le démarrage du moteur, le liquide de refroidissement à température ambiante du circuit principal (30) vers la deuxième des deux cavités (17, 18), et le liquide de refroidissement de la première des deux cavités (17, 18), stocké en vue du chauffage du circuit principal, vers le circuit principal (30) de manière à accélérer le réchauffement du moteur au cours du démarrage.

2. Dispositif selon la revendication 1, **caractérisé en ce que** la paroi de la vessie est souple.

3. Dispositif selon l'une quelconque des revendications précédentes **caractérisé en ce que** la paroi de la vessie est imperméable.

4. Dispositif selon l'une des revendications 1 à 2, **caractérisé en ce que** la paroi de la vessie est faiblement perméable, le liquide ne pouvant traverser la paroi que si une différence de pression de part et d'autre de la paroi est supérieure à environ 0,1 bars.

5. Dispositif selon l'une quelconque des revendications précédentes **caractérisé en ce que** la paroi de la vessie comprend une pluralité d'ouvertures (12, 12', 12") ménagées sur la vessie déformable (11).

6. Dispositif selon l'une quelconque des revendications précédentes, **caractérisé en ce que** les moyens de pompage (21, 22) du circuit auxiliaire sont composés d'une première pompe électrique (21) destinée à faire circuler le liquide du réservoir de stockage vers le circuit principal et d'une seconde pompe électrique (22) destinée à faire circuler le liquide du circuit principal vers le réservoir de stockage.

7. Dispositif selon l'une quelconque des revendications précédentes, **caractérisé en ce que** les moyens de pompage (21, 22) du circuit auxiliaire sont composés d'une pompe électrique (24) destinée à faire circuler le liquide du réservoir de stockage vers le circuit principal et d'une seconde pompe électrique (36) destinée à faire circuler le liquide dans le circuit principal, et également du circuit principal (30) vers le réservoir de stockage (10).

8. Dispositif selon l'une quelconque des revendications précédentes, **caractérisé en ce que** le réservoir de stockage comprend une vanne (23) destinée à isoler le réservoir de stockage (10) du circuit principal (30).

## Patentansprüche

1. Vorrichtung zur Flüssigkeitskühlung für einen Verbrennungsmotor, die aufweist
- einen Hauptkreislauf (30), der die Wasserkammer (31) des Motors (M) enthält;
- einen mit dem Hauptkreislauf (30) verbundenen Hilfskreislauf (20), wobei der Hilfskreislauf einen Speicherbehälter einer Kühlflüssigkeit für einen Verbrennungsmotor enthält; wobei der Speicherbehälter mit der Kühlvorrichtung verbunden ist und enthält
∘ einen steifen wärmebeständigen Behälter (14);
∘ eine verformbare Blase (11);
∘ einen durch das Innere der Blase (17) geformten Hohlraum; und
∘ einen zwischen der Blase (11) und dem steifen Behälter (14) geformten Hohlraum (18);
∘ eine Vielzahl von Verbindungsöffnungen (15 und 16), die dazu bestimmt ist, mit dem Hilfskreislauf (20) verbunden zu werden;
- Pumpeinrichtungen (21, 22, 23), die von Steuereinrichtungen (40) gesteuert werden,
**dadurch gekennzeichnet, dass** die Pumpeinrichtungen in der Lage sind zu übertragen:
- beim Stillstand des Motors, die vom Motor erwärmte Kühlflüssigkeit vom Hauptkreislauf (30) zu einem ersten der zwei Hohlräume (17, 18) des Speicherbehälters (10) und die Kühlflüssigkeit auf Umgebungstemperatur vom zweiten der zwei Hohlräume (17,18) des Speicherbehälters (10) zum Hauptkreislauf (30);
- vor dem Start des Motors, die Kühlflüssigkeit auf Umgebungstemperatur vom Hauptkreislauf (30) zum zweiten der zwei Hohlräume (17, 18), und die Kühlflüssigkeit vom ersten der zwei Hohlräume (17, 18), die zum Erwärmen des Hauptkreislaufs gespeichert wird, zum Hauptkreislauf (30), um die Erwärmung des Motors beim Starten zu beschleunigen.

2. Vorrichtung nach Anspruch 1, **dadurch gekennzeichnet, dass** die Wand der Blase elastisch ist.

3. Vorrichtung nach einem der vorhergehenden Ansprüche, **dadurch gekennzeichnet, dass** die Wand der Blase undurchlässig ist.

4. Vorrichtung nach einem der Ansprüche 1 bis 2, **dadurch gekennzeichnet, dass** die Wand der Blase geringfügig durchlässig ist, wobei die Flüssigkeit die Wand nur durchqueren kann, wenn ein Druckunterschied zu beiden Seiten der Wand höher ist als etwa 0,1 Bar.

5. Vorrichtung nach einem der vorhergehenden Ansprüche, **dadurch gekennzeichnet, dass** die Wand der Blase eine Vielzahl von Öffnungen (12, 12', 12") enthält, die auf der verformbaren Blase (11) ausgebildet sind.

6. Vorrichtung nach einem der vorhergehenden Ansprüche, **dadurch gekennzeichnet, dass** die Pumpeinrichtungen (21, 22) des Hilfskreislaufs aus einer ersten elektrischen Pumpe (21), die dazu bestimmt ist, die Flüssigkeit vom Speicherbehälter zum Hauptkreislauf zirkulieren zu lassen, und aus einer zweiten elektrischen Pumpe (22) bestehen, die dazu bestimmt ist, die Flüssigkeit vom Hauptkreislauf zum Speicherbehälter zirkulieren zu lassen.

7. Vorrichtung nach einem der vorhergehenden Ansprüche, **dadurch gekennzeichnet, dass** die Pumpeinrichtungen (21, 22) des Hilfskreislaufs aus einer elektrischen Pumpe (24), die dazu bestimmt ist, die Flüssigkeit vom Speicherbehälter zum Hauptkreislauf zirkulieren zu lassen, und aus einer zweiten elektrischen Pumpe (36) bestehen, die dazu bestimmt ist, die Flüssigkeit im Hauptkreislauf und ebenfalls vom Hauptkreislauf (30) zum Speicherbehälter (10) zirkulieren zu lassen.

8. Vorrichtung nach einem der vorhergehenden Ansprüche, **dadurch gekennzeichnet, dass** der Speicherbehälter ein Ventil (23) enthält, das dazu bestimmt ist, den Speicherbehälter (10) vom Hauptkreislauf (30) zu isolieren.

## Claims

1. Liquid-cooling device for an internal combustion engine, having
- a main circuit (30) comprising the water chamber (31) of the engine (M);
- an auxiliary circuit (20) linked to the main circuit (30), said auxiliary circuit comprising a storage tank for storing a coolant for an internal combustion engine; said storage tank being connected to the cooling device and comprising
∘ a heat-insulated rigid tank (14);
∘ a deformable bladder (11);
∘ a cavity (17) formed by the interior of the bladder; and
∘ a cavity (18) formed between the bladder (11) and the rigid tank (14);
∘ a plurality of connection orifices (15 and 16) intended to be connected to said auxiliary circuit (20);
- pumping means (21, 22, 23) controlled by control means (40),
- **characterized in that** the pumping means are able:
- when the engine is stopped, to transfer the coolant heated by the motor from the main circuit (30) to a first of the two cavities (17, 18) of the storage tank (10) and the coolant at ambient temperature from the second of the two cavities (17, 18) of the storage tank (10) to the main circuit (30);
- before the engine is started, to transfer the coolant at ambient temperature from the main circuit (30) to the second of the two cavities (17, 18) and the coolant from the first of the two cavities (17, 18), stored in order to heat the main circuit, to the main circuit (30) so as to accelerate the heating of the engine during starting.

2. Device according to Claim 1, **characterized in that** the wall of the bladder is flexible.

3. Device according to either one of the preceding claims, **characterized in that** the wall of the bladder is impermeable.

4. Device according to either of Claims 1 and 2, **characterized in that** the wall of the bladder is slightly permeable, the liquid only being able to pass through the wall if a difference in pressure on either side of the wall is greater than around 0.1 bar.

5. Device according to any one of the preceding claims, **characterized in that** the wall of the bladder comprises a plurality of openings (12, 12', 12") formed in the deformable bladder (11).

6. Device according to any one of the preceding claims, **characterized in that** the pumping means (21, 22) of the auxiliary circuit are made up of a first electric pump (21) intended to cause the liquid to flow from the storage tank to the main circuit and of a second electric pump (22) intended to cause the liquid to flow from the main circuit to the storage tank.

7. Device according to any one of the preceding claims, **characterized in that** the pumping means (21, 22) of the auxiliary circuit are made up of an electric pump (24) intended to cause the liquid to flow from the storage tank to the main circuit and of a second electric pump (36) intended to cause the liquid to flow in the main circuit, and also from the main circuit (30) to the storage tank (10).

8. Device according to any one of the preceding claims, **characterized in that** the storage tank comprises a valve (23) intended to isolate the storage tank (10) from the main circuit (30).
